# EUROPÄISCHE PATENTSCHRIFT

(11) **EP 0 888 247 B1**
(45) Veröffentlichungstag und Bekanntmachung des Hinweises auf die Patenterteilung: **22.09.2010**
(21) Anmeldenummer: 97918015.5
(22) Anmeldetag: 12.03.1997
(51) Int. Cl.: C02F 1/42, C02F 9/00, B01J 47/02, B01J 47/00

(54) **WASSERAUFBEREITUNGSGERÄT MIT TRINKWASSERFILTER, REGENERIERVORRICHTUNG UND VERFAHREN ZUM AUFBEREITEN VON TRINKWASSER**
WATER TREATMENT DEVICE WITH DRINKING WATER FILTER, REGENERATION DEVICE AND PROCESS FOR TREATMENT OF DRINKING WATER
DISPOSITIF DE TRAITEMENT DE L'EAU AVEC FILTRE D'EAU POTABLE, DISPOSITIF DE REGENERATION ET PROCEDE DE PREPARATION D'EAU POTABLE

(30) Priorität: 15.03.1996 DE 19610172
(43) Veröffentlichungstag der Anmeldung: 07.01.1999
(73) Patentinhaber: BILZ, Roland, 94034 Passau (DE)
(72) Erfinder: BILZ, Roland, 94034 Passau (DE)
(74) Vertreter: Wasmeier, Alfons
(86) Internationale Anmeldenummer: PCT/DE1997/000483
(87) Internationale Veröffentlichungsnummer: WO 1997/034832

(56) Entgegenhaltungen:
- EP-A- 0 483 738
- FR-A- 1 155 259
- GB-A- 212 453
- GB-A- 399 514
- GB-A- 1 305 373
- US-A- 1 698 743
- US-A- 3 342 340
- US-A- 4 769 143
- US-A- 4 826 594
- US-A- 5 061 367
- US-A- 5 149 437

## Beschreibung

Die Erfindung betrifft ein Wasseraufbereitungsgerät nach dem Oberbegriff des Anspruches 1 zum Entfernen von Schadstoffen, insbesondere Chlor, chlorierten Kohlenwasserstoffen, Pestiziden, Herbiziden, Isektiziden, Schwermetallen und Nitraten aus Leitungswasser, um Trinkwasser für die Verwendung im Haushalt zu bereiten. Insbesondere betrifft die Erfindung eine abgeänderte und verbesserte Ausführung eines Wasseraufbereitungsgerätes, wie es Gegenstand des EP-Patentes 483 738 des gleichen Anmelders ist.

Dieses bekannte Wasseraufbereitungsgerät zum Entfernen von Schadstoffen, insbesondere Chlor, chlorierten Kohlenwasserstoffen, Pestiziden, Herbiziden, Insektiziden, Schwermetallen und Nitraten aus Leitungswasser, das aus einem Gehäuse mit Deckel, Mantel und Boden besteht, an dessen Deckel ein Wasserauslauf angeordnet ist, an dessen Boden eine Leitungsverbindung zum Wassereinlauf verläuft, und das Aktivkohle und Anionenaustauschmaterial aufweist, die von dem zu reinigenden Leitungswasser in Richtung vom Wassereinlauf zum Wasserauslauf für gereinigtes Wasser durchströmt werden, zeichnet sich dadurch aus, daß das Gehäuse einen unteren und einen oberen Gehäuseabschnitt aufweist, die voneinander lösbar sind, daß das Gehäuseinnere eine erste, untere Kammer mit Aktivkohle und eine zweite, obere Kammer mit Anionenaustauschmaterial besitzt, daß die beiden Kammern jeweils oben und unten durch Filtervliese abgeschlossen sind, und daß die beiden Kammern im wesentlichen das volle Volumen der unteren und oberen Gehauseabschmtte einnehmen.

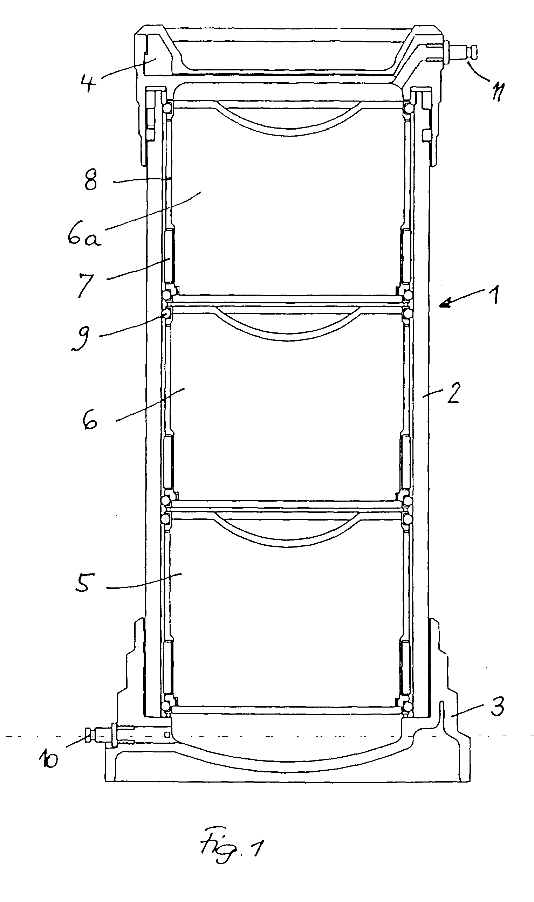

US-A- 506 1367 offenbart ein Gerät für die Wasseraufbereitung, das ein zylinderförmiges Gehäuse mit Deckel, Wasseremlauf und Wasserauslauf sowie auswechselbarer Filterkartusche aufweist (s. Spalte 4, Zeilen 49-60 und Abb. 1). Die Kartusche ist zylindrisch und weist einen Griff und Öffnungen auf, die von Wasser von unten nach oben durchströmt werden (s. Spalte 4, Zeile 25, 31 und 66 - Spalte 5, Zeile 2).

Aus US-A-47 69 143 ist ein Gerät bekannt, das aus einem zylindrischen Behälter mit verschiedenen, durch Zwischenböden voneinander getrennten, miteinander in Verbindung stehenden Kammern bzw. Bereichen besteht. Ein derartiges Gerät weist keine auswechselbaren Kartuschen auf, da das Gehäuse feste Zwischenböden hat. Die Kombination der Filterbereiche ist dadurch fest vorgegeben und eine Regenerierung der Filtermaterialien nicht möglich, so daß das Filter nach der Erschöpfung entsorgt werden muß.

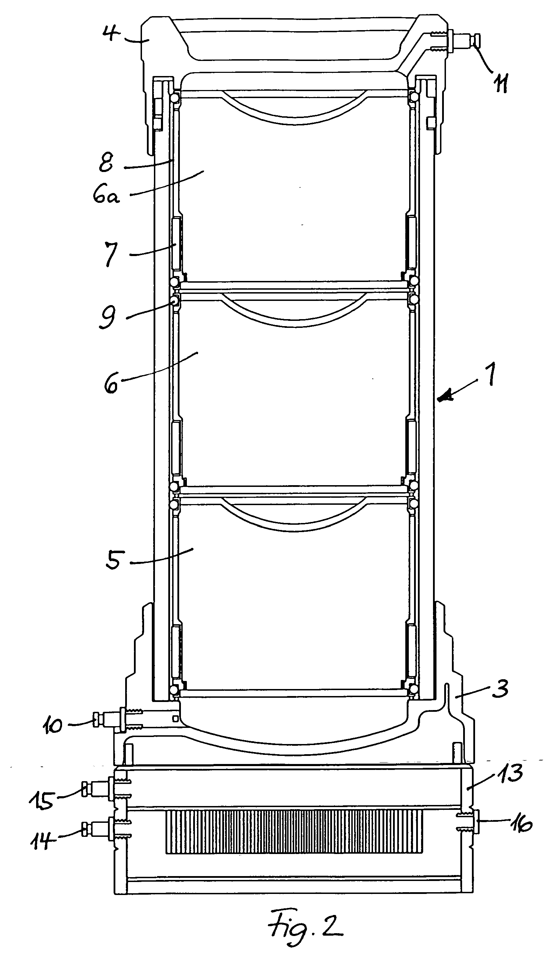

GB-A-21 24 53 offenbart den Gegenstromregenerationsbetrieb, wobei ein Solebehälter und ein Leitungssystem vorgesehen sind, so daß im Regenerationsbetrieb Ein- und Auslauf vertauscht werden, und sowohl das Wasser als auch die Regenerationssole in beiden Richtungen das Filtermaterial durchströmen können (s. Seite 1, Zeilen 19-22, Seite 4, Zeilen 4-8 und Abb. 2).

GB-A-39 95 14 offenbart den Gleichstromregenerationsbetrieb, wobei das Wasseraufbereitungsgerät, das im Normalbetrieb vom Wasser von unten nach oben durchströmt wird, auf den Kopf gestellt wird, und die Regenerationslösung das Filtermaterial von oben nach unten durchströmt (s. Seite 1, Zeilen 86-89 und Anspruch 1).

Die mit der Erfindung zu lösende Aufgabe wird darin gesehen, eine Wasseraufbereitungsvornchtung mit einem regenerierbaren Filtermedium bereitzustellen, das flexibel an die jeweilige Stoffbelastung angepaßt werden kann. Desweiteren soll die Regeneration vom Verbraucher selbst durchgefuhrt werden können.

Diese Aufgabe wird mit den Merkmalen der Vorrichtung nach den Patentansprüchen 1-15 sowie mit den Merkmalen der Verfahrensansprüche 16-19 zum Betreiben bzw. Regenerieren der Wasseraufbereitungsvorrichtung nach Anspruch 1 gelöst.

Mit dem erfindungsgemäßen Vorschlag wird erreicht, daß Kartuschen mit identischen äußeren Abmessungen und unterschiedlichen Filtermedien miteinander baukastenförmig in beliebiger Weise je nach den Filtererfordernissen in das zylindrische, rohrförmige Filtergehäuse eingesetzt werden können. Zum Einsetzen und Entnehmen der Kartuschen ist lediglich der Deckel des Gerätes abzunehmen. Der Deckel ist dabei so ausgebildet, daß er beim auf den Kopf stellen des Gerätes als Standfläche dienen kann. Des weiteren ist der Deckel mit einem Griff versehen, ebenso wie jede der Kartuschen, um ein Heraus-nehmen und Einsetzen zu erleichtern.

Zwischen den einzelnen Kartuschen und dem Filtergehäuse ist ein Druckausgleich erforderlich. Hierzu sind Überströmöffnungen im Kartuschengehäuse vorgesehen, durch die überströmendes Wasser in den Bereich zwischen Kartuschen und Filtergehäuse, der nicht gespült werden kann, gelangt. Bei diesem überströmenden Wasser ist ein Aufkeimen möglich. Um diesem Aufkeimen entgegenzuwirken, wird im Raum zwischen Kartusche und Filtergehäuse eine Vorrichtung vorgesehen, die Salz in Tabletten- oder in Soleform enthält, das in Reaktion mit dem überströmenden Wasser eine Salzlösung ergibt, die das Aufkeimen verhindert und das Wasser entkeimt. Beispielsweise können ein oder mehrere Salztabletten an der Mantelfläche der Kartusche vorgesehen sein.

In weiterer Ausgestaltung der Erfindung ist der Trinkwasserfilter zusätzlich mit einer Keimmembrane versehen, mit deren Hilfe Keime gefiltert werden. Die Keimmembrane ist in einem Gehäuse angeordnet, das beispielsweise als Zusatzgehäuse unterhalb des Bodens des Filtergehauses mit dem Filtergerät verbunden ist. Um ein Auswechseln der Membrane zu ermoglichen, ist das Keimmembranegehäuse so ausgebildet, daß es geoffnet werden kann.

Nach einer weiteren Ausführungsform der Erfindung sind die auswechselbaren Filterkartuschen im Filtergehäuse so angeordnet, daß sie einen ausreichend großen Abstand zur Innenwand des Filtergehäuses haben, damit sie hinterspült werden können.

Um die Trinkwasserfilter des Wasseraufbereitungsgerätes zu regenerieren und damit einen fortlaufenden einwandfreien Betrieb zu gewährleisten, ist eine Regenerationsvorrichtung vorgesehen, die aus einem über dem Filtergehäuse angeordneten bzw. auf den Deckel des Filtergerätes aufgesetzten Solebehälter, einer Leitungsverbindung zwischen Solebehälter und Boden des Filtergehäuses, sowie einer mit dem oberen Bereich des Filtergehäuses, z.B. dem Deckel verbundenen abführenden Leitung besteht. Durch den hochliegenden Solebehälter strömt die Sole unter Schwerkraftwirkung nach abwärts und drückt die Soleflüssigkeit durch die Kartuschen im Filtergehäuse von unten nach oben. Dabei werden die lonenaustauscherharze regeneriert und es wird der gesamte Inhalt des Trinkwasserfilters durch die Kochsalzlösung desinfiziert. Der Solebehälter kann jedoch auch in den Wasserkreislauf so eingeschaltet sein, daß ein Umschalten von normalem Filterbetrieb auf Regenerierungsbetrieb möglich ist, wobei die Regenerierung im Gegenstrom- oder im Gleichstromprinzip vorgenommen werden kann. Das Umschalten erfolgt über entsprechende Umschaltventile. Zum Regenerieren wird das Filtergehäuse des Wasseraufbereitungsgerätes auf den Kopf gestellt. Desweiteren kann im Rahmen vorliegender Erfindung der Salzbehälter für den Regenerationsvorgang in die Wasserleitung eingebaut und nach Beendigung der Regeneration wieder von der Wasserlertung abgetrennt werden. Hierbei werden lediglich die Anschlüsse für den Wassershahn und Ablaufschlauch umgesteckt.

Eine andere Möglichkeit der Regenenerung besteht darin, eine gesonderte Vorrichtung zum Eindrucken von Salzwasser in den Trinkwasserfilter vorzusehen. Ein derartiges Gerat besteht aus einem Gehäuse, dessen Behälter mit Sole gefüllt ist. Die Oberfläche der Sole ist durch eine platten- oder kastenförmige Beschwerung abgedeckt, so daß das Gewicht dieser Abdeckung kontinuierlich auf die Sole einwirkt und damit an der Unterseite des Behälters über einen Auslauf Sole erhöhten Druckes abfließen kann, die dann in das Filtergehäuse eingeführt wird und die im Filtergehäuse angeordneten Filterkartuschen von unten nach oben durchströmt. Eine derartige Vorrichtung ist zweckmäßigerweise so verwendbar, daß das Wasseraufbereitungsgerät in der Spüle abgestellt wird, während der mit Sole gefüllte Behälter daneben und erhöht auf der Arbeitsfläche steht, so daß zusätzlich zu dem durch die Gewichtsbelastung erzeugten Druck die Schwerkraft der Sole im Behälter ausgenutzt wird.

Trinkwasserfilter nach der Erfindung können vom Verbraucher selbst regeneriert werden. Eine Regenerierung ist erforderlich, wenn
die Aufnahmekapazität des Nitratharzes erschöpft ist (z.B. ist bei einer Nitratbelastung von ca. 100 mg/l und bei einer Entnahmemenge von ca. 10 I/Tag eine Regenerierung nach einem Nitratschlupf von ca. 10 mg/l zu empfehlen, was etwa einem Zeitraum von 8 Wochen entspricht),
die Keimmembrane durch die Filtrierung von Bakterien zunehmend verstopft ist und die dabei entstandene Verringerung der Durchsatzmenge, z.B. 2,0 l/Min., auf einen Wert von z.B. 1,0 l/Min. abgenommen hat,
der Trinkwasserfilter erstmals in Betrieb genommen wird, ferner bei Kartuschenwechsel oder Membranwechsel.

Die optimale Reinigung wird durch Gegenstromregenerierung erreicht. Hierbei werden Verstopfungen durch die Gegenströmung wieder aufgelöst und die im unteren Bereich der Filtermedien angesammelten Schadstoffe werden nicht unnötig durch die gesamte Filtermasse gefuhrt. Dadurch wird die Aufnahmekapazität erhöht.

Bei der Durchfuhrung der Regenerierung wird das Nitratharz vom Nitrat oder Nitrid gereinigt und erforderlichenfalls desinfiziert, die Aktivkohle ebenfalls gereinigt und erforderlichenfalls desinfiziert, die Keimmembrane von den Bakterien befreit und alle sonstigen Bakterien in der Vorkammer zerstört, wobei die Durchflußmengenkapazität der Membrane, z.B. in der Größenordnung von 2,0 l/Min., wieder hergestellt wird; alle Schwebstoffilter werden gereinigt und desinfiziert, ebenso wird die Kieselsteinschicht gereinigt und desinfiziert.

Das Desinfizieren der Filtermedien bzw. des gesamten Filters ist von besonderer Bedeutung, wenn der Trinkwasserfilter ohne Keimmembrane verwendet wird. Nach dem Spüldurchgang mit salzfreiem Wasser wird der Trinkwasserfilter wieder normal an die Wasserleitung angeschlossen.

Alle verwendeten Materialien sind entsprechend den Bundesgesundheitsamt-Normen und lebensmittelecht ausgelegt.

Nachstehend wird die Erfindung an Hand verschiedener Ausführungsformen in Verbindung mit der Zeichnung dargestellt. Es zeigt:
- Fig. 1: eine Schnittdarstellung durch eine Ausführungsform eines Wasseraufberei- tungsgerätes nach der Erfindung,
- Fig. 2: eine abgeänderte Ausführungsform des Wasseraufbereitungsgerätes mit Keim- membrane,
- Fig. 3: eine andere Ausführungsform eines erfindungsgemäßen Wasseraufbereitungs- gerätes,
- Fig. 4: eine abgeänderte Ausführungsform des Wasseraufbereitungsgerätes nach Fig. 3 mit Keimmembrane,
- Fig. 5: eine weitere Ausfuhrungsform der Erfindung mit vorgeschalteter Keimmembrane,
- Fig. 6: ein Wasseraufbereitungsgerat der Erfindung im Regenerationsbetneb mit Sole- behälter,
- Fig. 7: ein Wasseraufbereitungsgerat der Erfindung mit Gegenstrom-Regeneration,
- Fig. 8: ein Wasseraufbereitungsgerat nach der Erfindung mit Gleichstrom-Regeneration,
- Fig. 9: eine abgeänderte Ausführungsform der Gegenstrom-Regeneration,
- Fig. 10: eine abgeänderte Auführungsform der Gleichstrom-Regeneration,
- Fig. 11: ein Untertischgerät im Regenerationszustand,
- Fig. 12: ein Untertischgerät im Filterbetnebszustand,
- Fig. 13: eine abgeänderte Ausführungsform eines Untertischgerätes im Regenera- tionszustand,
- Fig. 14: eine abgeänderte Ausführungsform eines Untertischgerätes im Filterbetriebs- zustand,
- Fig. 15: ein Wasseraufbereitungsgerät nach der Erfindung im Gegenstrom-Regenera- tionsbetrieb mit Druckbehälter,
- Fig. 16: eine zusätzliche Variante der Wasseraufbereitung nach der Erfindung im Bereich der Keimmembrane, und
- Fig. 17: die Variante nach Fig. 16 in ein Wasseraufbereitungsgerät nach der Erfindung integriert.

Das gesamte Wasseraufbereitungsgerat ist mit 1 bezeichnet. In einem zylindrischen, rohrförmigen Gehäuse 2 mit Boden 3 und abnehmbarem Deckel 4 sind auswechselbare Filterkartuschen 5, 6, 6a übereinander angeordnet. Diese Kartuschen haben identische Form und Abmessungen, so daß sie gegeneinander austauschbar sind. Zwischen Filtergehäuse 2 und Kartuschen 5, 6, 6a sind z.B. in Ausnehmungen der jeweiligen Kartusche Salztabletten 7 angeordnet, die in dem Bereich zwischen Filtergehäuse 2 und Kartusche 5, 6, 6a mit aus den Kartuschen überströmendem Wasser 8 in Kontakt kommen und sich dabei auflösen. Die dabei entstehende Salzlösung verhindert das Aufkeimen des über-strömenden Wasser, so daß das Wasser keimfrei bleibt. Die Kartuschen 5, 6, 6a sind durch Dichtungsringe 9 sowohl in ihrem oberen als in ihrem unteren Bereich gegen das Filtergehäuse 2 abgedichtet. Das aufzubereitende Wasser tritt über einen Einlauf 10 am Boden 3 ein, strömt durch die Filterkartuschen 5, 6, 6a von unten nach oben und verläßt das Gerat über den Auslauf 11.

Das Filtergerät nach Fig. 2 ist im Prinzip ähnlich dem nach Fig. 1 aufgebaut, weist jedoch zusätzlich eine Keimmembrane 12 in einem Keimmembranegehäuse 13 auf, das unterhalb des Bodens 3 des Filtergehäuses 2 angeordnet ist und einen Einlauf 14, einen Auslauf 15 und eine Entlüftung 16 besitzt. Das Keimmembranegehäuse 13 ist von dem Filtergehäuse 2 lösbar und kann zum Auswechseln der Keimmembrane 12 geöffnet werden.

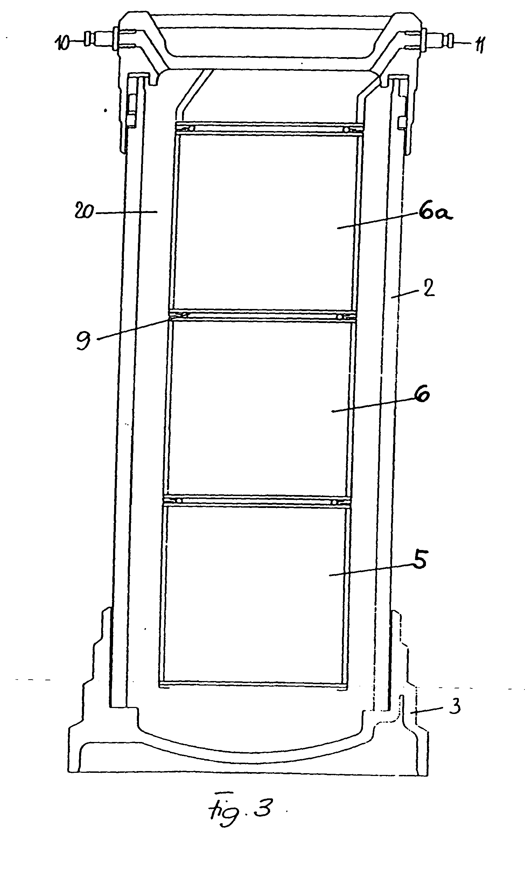

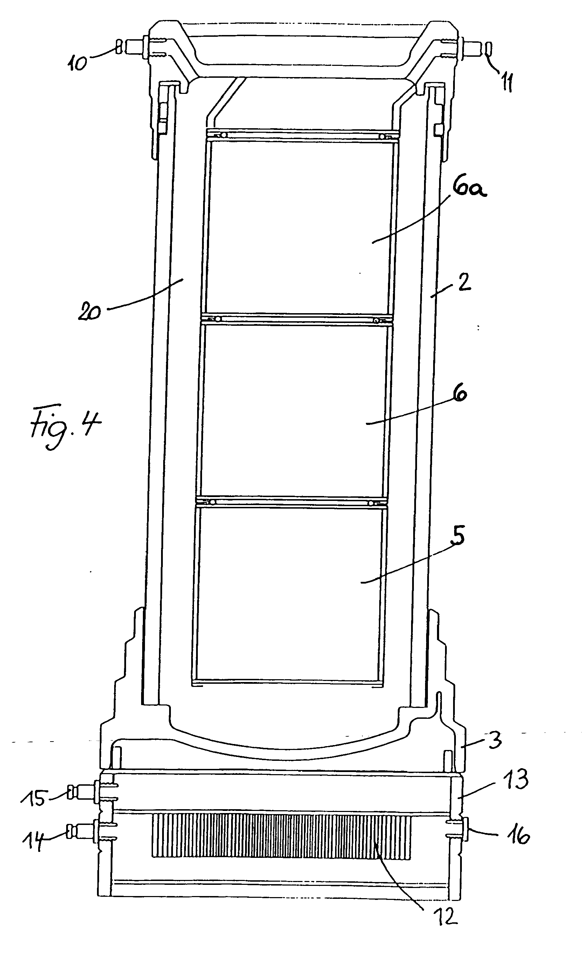

Bei der Ausführungsform des Filters 1 nach Fig. 3 ist zwischen den Filterkartuschen 17, 18, 19 und dem Filtergehäuse 2 ein Strömungskanal 20 vorgesehen, durch den die Kartuschen hinterspült werden können. Fig. 4 zeigt in Abänderung der Fig. 3 das Filtergehäuse 2 in Verbindung mit einem Keimmembranegehäuse entsprechend Fig. 2.

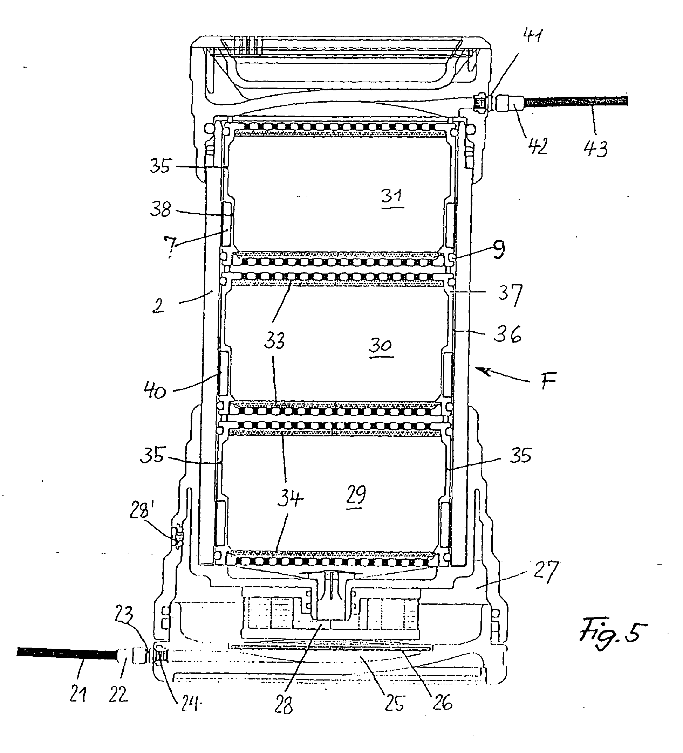

Bei der Ausführungsform nach Fig. 5 strömt das Trinkwasser über einen Zulaufschlauch 21, eine Anschlußkupplung 22 und ein Einlaufsteckteil 23 im Bodenbereich in das Filtergehäuse F ein. Die Zulaufwassermenge wird über eine Mengenreduziervorrichtung 24 auf einen maximalen Wert, z.B. 2,0 l/Min. begrenzt. In der Einlaufkammer 25 wird das Trinkwasser durch eine Kieselsteinschicht vorgefiltert, wobei gröbere Schwebstoffteile entfernt werden. Anschließend strömt das Wasser durch einen Schwebstoffilter 26, der z.B. aus Kunststoffaserwolle besteht, und wird nochmals gereinigt. Das vorgefilterte Wasser gelangt in eine Vorkammer 27, in der eine Keimmembrane 28, z.B. vom Typ Sartopran-PH der Firma Sartorius, mit Minifilterkerze oder dgl. alle im Trinkwasser evtl. vorhandenen Keime oder Bakterien zurückhält bzw. herausfiltert, bevor es in die Hauptkammer einströmen kann. Luft, die allenfalls in der Vorkammer 27 vorhanden ist, wird über eine Entlüftungsschraube 28' abgelassen. Das auf diese Weise schwebstoffund bakterienfreie Trinkwasser wird anschließend in der Hauptkammer durch in Reihe geschaltete Kartuschen 29, 30, 31 geleitet, die entsprechend der gewünschten bzw. notwendigen Schadstoffentsorgung mit unterschiedlichen Filtermedien gefüllt sind, z.B. mit Aktivkohle für die Ad- und Absorption von Pflanzenschutzmitteln und dgl., oder mit selektivem Nitratharz für die Entfernung von Nitrat und Nitrid. Zweckmaßigerweise sind alle Filtermedien mit einem regenerierbaren Silbergranulat versehen, dessen Menge so gewählt ist, daß kein Silber an das Trinkwasser abgegeben wird. Der Trinkwasserfilter kann somit auch in Bereichen eingesetzt werden, in denen auf eine Keimmembrane verzichtet werden kann.

Die einzelnen Kartuschen 29, 30, 31 sind zylinderförmige Behälter, die unten und oben jeweils durch ein durchlässiges Kunststoffgitter 33 offen sind. Die Seitenwände der Kartuschen sind undurchlässig. Ein Ausspülen der Filtermedien wird durch den Einsatz von Schwebstoffiltern 34 in Form von Kunststoffaserwolle verhindert. Die Schwebstoffilter sind ferner so ausgelegt, daß sie Volumenänderungen der Filtermedien ausgleichen. Die Kartuschenbehälter 29, 30, 31 sind an ihren Seitenwänden 35 zur Gehäusewand hin mit Gummiringen 35a abgedichtet, so daß ein Zwischenraum 36 entsteht. Bevor ein Trinkwasserfilter in Betrieb genommen wird, herrscht im gesamten Behälter und im Zwischenraum 36 atmosphärischer Druck. Wird der Trinkwasserfilter an die Wasserversorgungsleitung angeschlossen, steigt bei der Befüllung der Innendruck im Behälter auf z.B. ca. 6 bar an. Zum Druckausgleich im Zwischenraum 36 sind in den Kartuschen 29, 30, 31 Druckausgleichsöffnungen 37 vorgesehen. Aufgrund des Überdruckes strömt nunmehr Wasser in den Zwischenraum 36 bis zu einer Menge von maximal 80 ml ein. Um evtl. Keimbildungen in den Zwischenräumen 36 wirksam zu verhindern, sind an der Kartuschenaußenwand 35 Taschen 38 vorgesehen, die zur Aufnahme von Salztabletten 39 bestimmt sind. Die Salztabletten 39 sind durch Kunststoffgitter 40 abgedeckt, sie lösen sich durch den Kontakt mit dem Wasser im Zwischenraum 36 bis zur Erzielung eines Sättigungswertes auf (ca. 10 g). Die so entstandene Salzlösung verhindert eine Bakterienbildung im Zwischenraum 36. Im normalen Betriebszustand bildet sich kein wesentlicher Druckunterschied zwischen dem Behälter und dem Zwischenraum 36 auf.

Hat das Trinkwasser die drei Kartuschen 29, 30, 31 von unten nach oben durchströmt, stromt es weiter durch einen Auslaufstecknippel 41, eine Anschlußkupplung 42 und einen Anschlußschlauch 43 zu einer Auslaufarmatur. Damit ist der Filtervorgang abgeschlossen. Der Deckel des Trinkwasserbehälters ist durch einen Bajonettverschluß zu öffnen, so daß der Trinkwasserbehalter mit Filterkartuschen auf einfache Weise bestückt werden kann bzw. die Kartuschen auf einfache Weise ausgetauscht werden können. Der Boden läßt sich ebenfalls öffnen, um die Keimmembrane oder Schwebstoffilter zu erneuern.

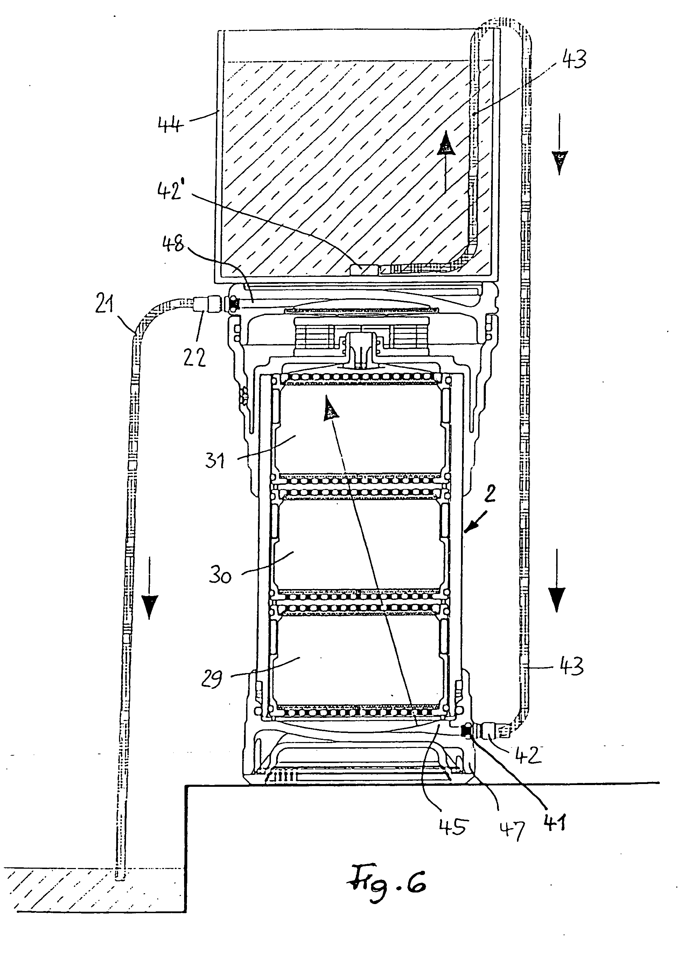

Fig. 6 zeigt eine Anordnung zum Regenerieren des Trinkwasserfilters des Wasseraufbereitungsgerätes 1. Der Trinkwasserfilter wird von den Wasseranschlußleitungen 21, 43 mit Hilfe der Anschlußkupplungen 22 und 42 abgetrennt und umgedreht auf den Kopf gestellt. Der Zulaufschlauch 43 wird an den Stecknippel 42 des Salzbehälters 44 angeschlossen. Die Durchlaufwassermenge wird durch eine Reduziervorrichtung auf z.B. maximal 0,3 l/min. begrenzt. Der Anschlußschlauch 43 des Salzbehälters 44 wird an den Auslaufstecknippel 41 angeschlossen. Der Regenerierschlauch 21 wird mit dem Einlaufsteckteil 22 am Deckel verbunden und in den Ablaufkanal geleitet. Sobald der Salzbehälter mit normalem Kochsalz befüllt ist, kann der Regenerationsvorgang durchgeführt werden. Die Sole bzw. das Salzwasser im Behälter 44 dient zum Regenerieren der in den Filterkartuschen 29, 30, 31 vorhandenen lonenaustauscher-Harze. Über die Schlauchleitung 43 strömt die Salzlösung durch den Einlauf 41 des Deckels, der jetzt der Boden ist, durch die einzelnen Kartuschen und durch das gesamte Filtergehäuse hindurch nach oben. Am Boden 47, der jetzt der Deckel ist, fließt das Salzwasser über die Schlauchleitung 21 durch den Auslauf 22, der sonst der Einlauf ist, ab.

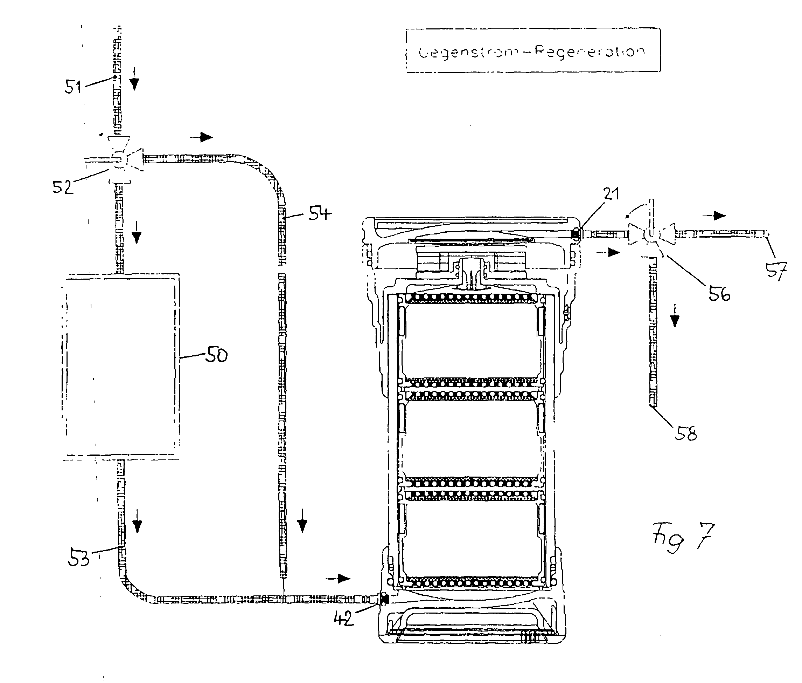

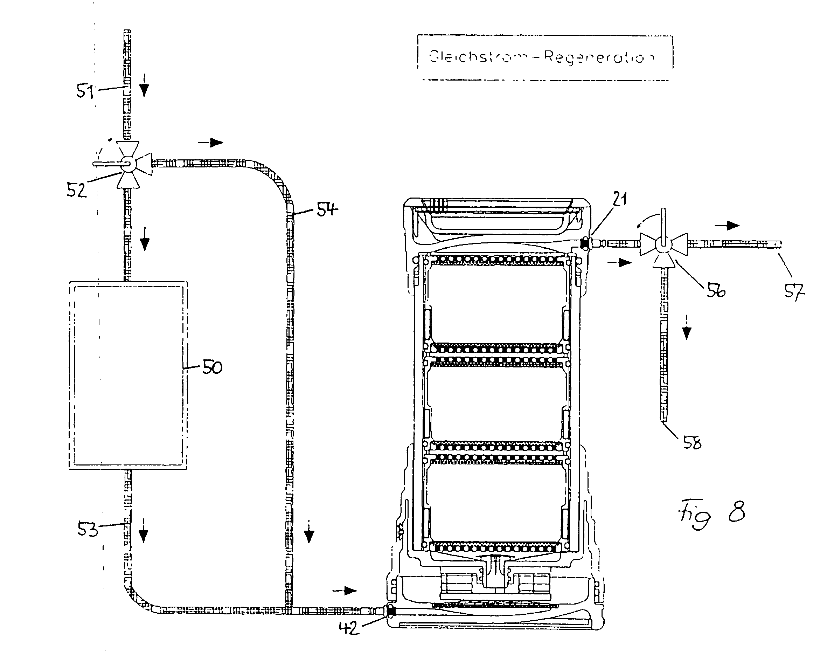

Eine weitere Ausführungsform einer Regeneration ist in Fig. 7 und Fig. 8 vorgesehen. Fig. 7 zeigt einen Gegenstrom-Regenerationsbetrieb, Fig. 8 einen GleichstromRegenerationsbetrieb. Das Filtergehäuse F ist hierbei wie z.B. in Fig. 5 dargestellt ausgefuhrt. Ein Solebehälter 50 ist in den Verlauf der Wasserleitung 51 eingeschaltet. Stromaufwärts ist ein Umschaltventil 52 vorgesehen, das im Filterbetrieb den Wasserfluß über die Leitung 54 in den Einlauf 42 des Filtergehäuses F leitet, während für den Regenerationsbetrieb das Umschaltventil 52 den Fluß in die Leitung 54 sperrt und in die Leitung 53 freigibt, so daß der Wasserstrom durch die Sole im Behälter 50 und von dort in den Einlauf 42 fließt. Am Auslauf 21 ist ein Umschaltventil 56 vorgesehen, das in der einen Stellung den Wasserfluß zum Wasserhahn 57 und in der anderen Stellung zum Ablauf 58 freigibt. Für den Regenerationsvorgang wird das Filtergehäuse auf den Kopf gestellt.

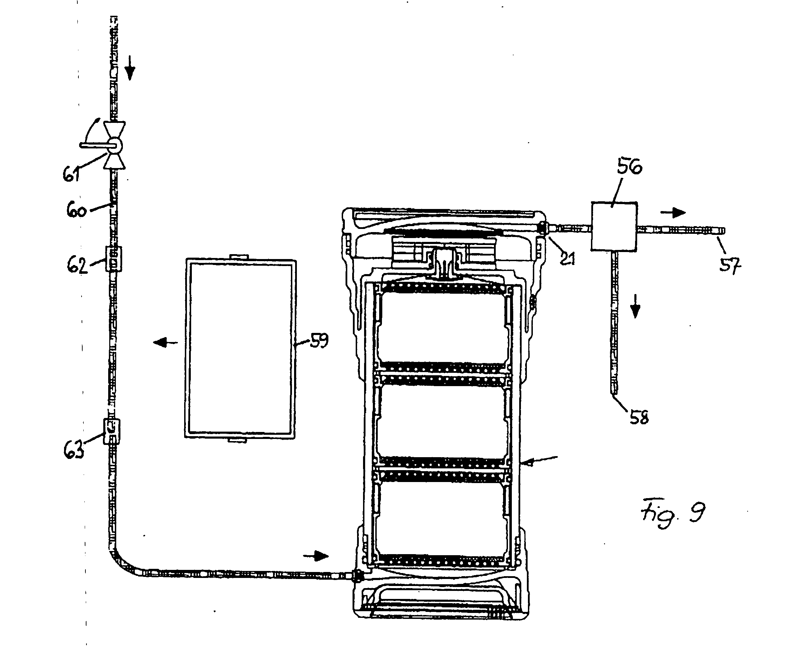

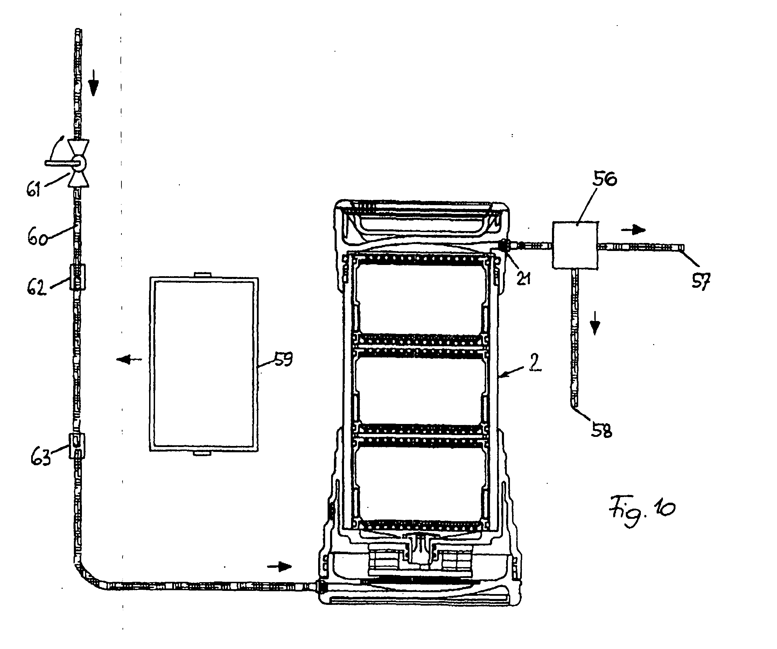

Bei einer abgeänderten Ausführungsform einer Regenerationsanordnung nach den Figuren 9 und 10 wird der Solebehälter 59 nur für den Regenerationsbetrieb in die Wasserleitung 60 eingeschaltet, und mit 61 ist ein Absperrventil dargestellt, 62 und 63 sind die Anschluß-stellen zur Aufnahme des Solebehälters 59. Beim Übergang von Filterbetrieb auf Regenerationsbetrieb werden der Wasserhahn- und der Ablaufschlauch am Ausgang 21 des Filtergehäuses F einfach umgesteckt.

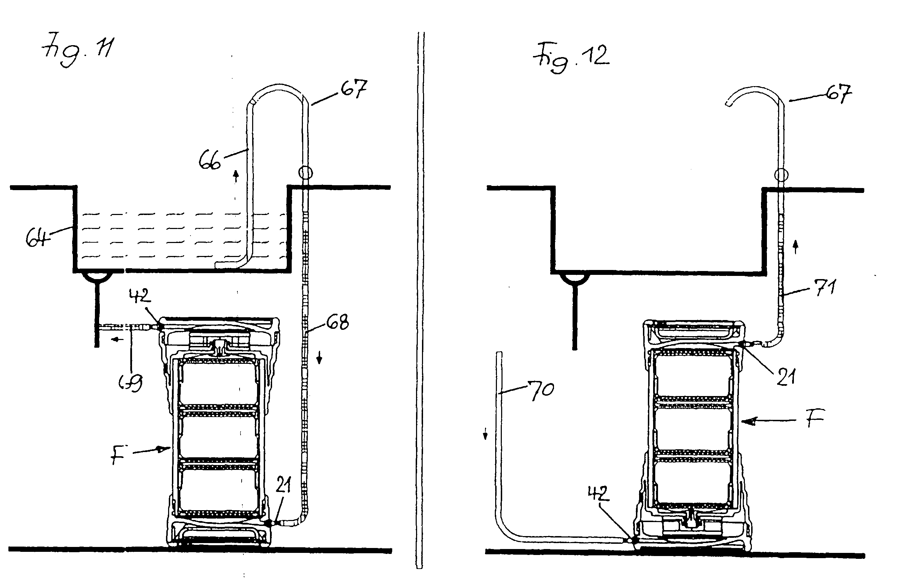

Bei einer Untertischausführung der Filteranordnung nach den Figuren 11 und 12 ist das Filtergehäuse F unterhalb des Spülbeckens 64 angeordnet. Im Regenerationsbetrieb ist das Spülbecken 64 mit Sole 65 gefüllt. Ein Schlauch 66 ist vom Boden des Beckens 64 zum Auslaufhahn 67 geführt und über eine Leitung 68 mit dem Auslauf 21 des Filtergehäuse-deckels verbunden. Die Sole 65 strömt durch die Leitung 68 und in das Filtergehäuse F, durch die Kartuschen von unten nach oben (bei dem auf den Kopf gestellten Filtergerät) und von dem Einlauf 42, der hier als Auslauf wirkt, über eine Schlauchleitung 69 in den Abflußkanal. Im Filterbetrieb nach Fig. 12 wird das Filtergerät in der herkömmlichen Weise betrieben, d.h., daß Leitungswasser über die Leitung 70 und den Einlauf 42 in das Filtergehause F eingeführt wird, durch die Kartuschen nach oben strömt und am Auslauf 21 über die Anschlußleitung 71 an den Auslaufhahn 67 gelangt, wo das gefilterte Wasser abgenommen werden kann.

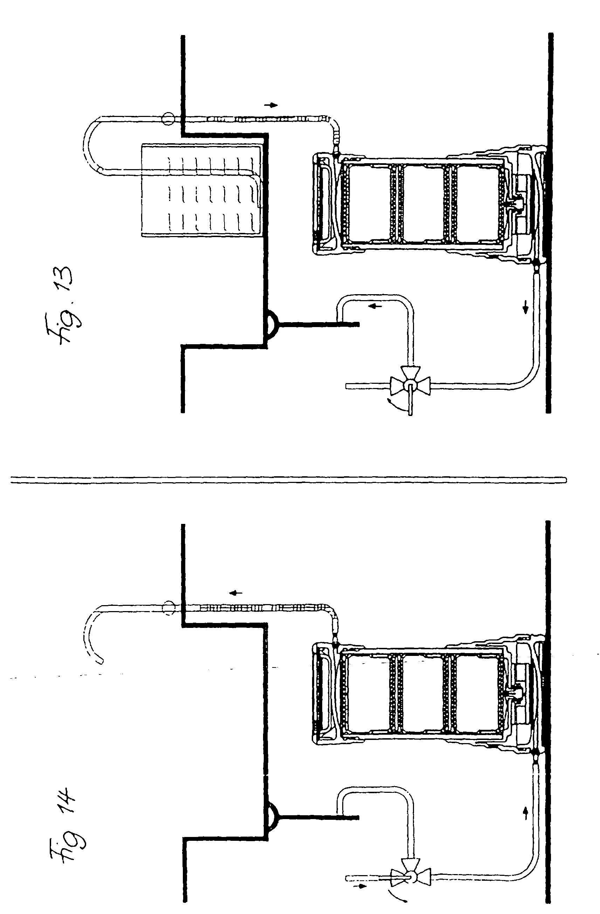

In den Figuren 13 und 14 ist jeweils ein Betrieb der Filteranordnung im Regenerationszustand und im Filterbetriebszustand dargestellt, wobei im Regenerationszustand und im Gegenstrom-Regenerationsbetrieb ein Behalter mit Sole im Spülbecken angeordnet ist, und die Sole aus der Filteranordnung uber ein Absperrventil in den Kanalabfluß ababgeführt wird, während im Filterbetrieb das zugeführte Wasser von der Wasserleitung über das Absperrventil in den Boden der Filteranordnung eingeleitet wird und über den Auslaufhahn als aufbereitetes Wasser am Spülbecken abgenommen werden kann.

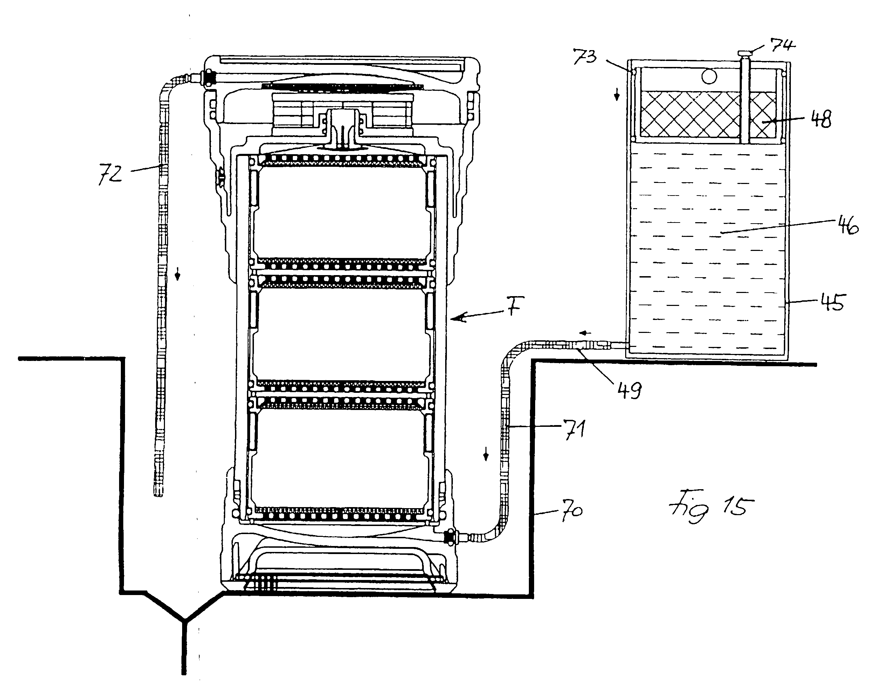

Eine weitere Ausführungsform einer Gegenstrom-Regeneration ist in Fig. 15 dargestellt. Das Filtergerät F ist hierbei in die Spüle 70 gestellt. Daneben, d.h. auf der Tischplatte, ist ein Behälter 45 aufgestellt, der Sole 46 enthält. Auf der Oberseite des Solevolumens 46 ist ein Gehäuse 47 schwimmend aufgesetzt, das eine Gewichtsbelastung 48 aufnimmt, damit ein Druck auf das Solevolumen 46 ausgeübt wird. Die Sole wird am Auslass 49 über eine Schlauchleitung 71 in das Filtergehäuse F eingeführt und durch die einzelnen Filterkartuschen gedrückt, und anschließend oben (bei auf dem Kopf gestelltem Filtergehäuse) über eine Schlauchleitung 73 in den Abwasserkanal abgeleitet. Das Gehäuse 47 innerhalb des Behälters 45 ist nach Art eines Schwimmers ausgebildet und im Behälter 45 höhenbeweglich angeordnet sowie über Gummiringe 73 gegen die Behälterwand abgedichtet. Des weiteren nimmt das Gehäuse 47 ein Beund Entlüftungsrohr 74 auf.

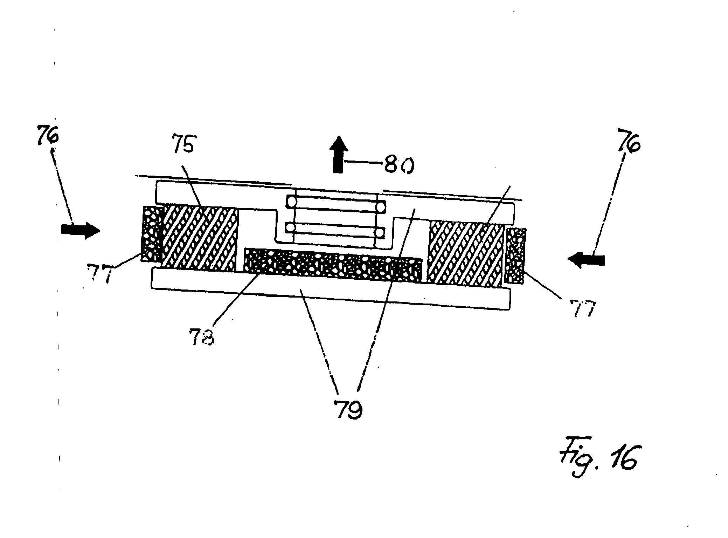

Zur Filterung und Abscheidung von Bakterien und Mikroorganismen, die sich im Rohwasser befinden können, wird im erfindungsgemäßen Wasseraufbereitungsgerät eine Keimmembrane vorgesehen. Wie im Prinzip in Fig. 16 dargestellt, lagern an einer solchen Keimmembrane 75 an deren Außenseite, nämlich am Filtereingang, die Bakterien an. Diese Bakterien werden bei der Regeneration mit Kochsalz zerstört und wieder aus dem Trinkwasserfiltergehäuse ausgespült. Eine derartige Regeneration wird jedoch normalerweise nur alle 4 - 8 Wochen durchgeführt. Zwischen diesen Regenerationen können im ungünstigen Fall Bakterien durch die Keimmembrane hindurchwachsen, so dass die Keimfreiheit nach der Membrane nicht mehr gewährleistet wäre. Um dieses Hindurchwachsen zu verhindern, müssen die an der Keimmembrane abgeschiedenen Bakterien so schnell wie möglich, und mindestens innerhalb von 3 Tagen, abgetötet werden. Hierzu wird in die Keimmembrane 75 nach dem Filter bei 78 und in die Keimmembrane vor dem Filter 75bei 77 in das Keimmembrangehäuse 79, ein Gemisch z.B. aus Kupfer und Zink in Form von sog. Redox-Granulaten eingesetzt. Bei einer Redox-Reaktion wird z.B. ähnlich wie in einer Batterie ein elektrolytischer Strom erzeugt. Die dabei auftretende äußerst geringe Spannung bewirkt eine Zerstörung der an der Keimmembrane 75 haftenden Bakterien. Die Bakterien können somit nicht mehr durch die Membrane hindurchwachsen. Der Vorgang der Bakterienzerstörung wird durch zusätzliche chemische Reaktionen verstärkt. Wie die Praxis gezeigt hat, treten negative Beeinträchtigungen des zu filternden Wassers bei diesem Vorgang nicht auf. Das gefilterte Wasser tritt bei 80 aus dem Keimmembrangehäuse 79 aus

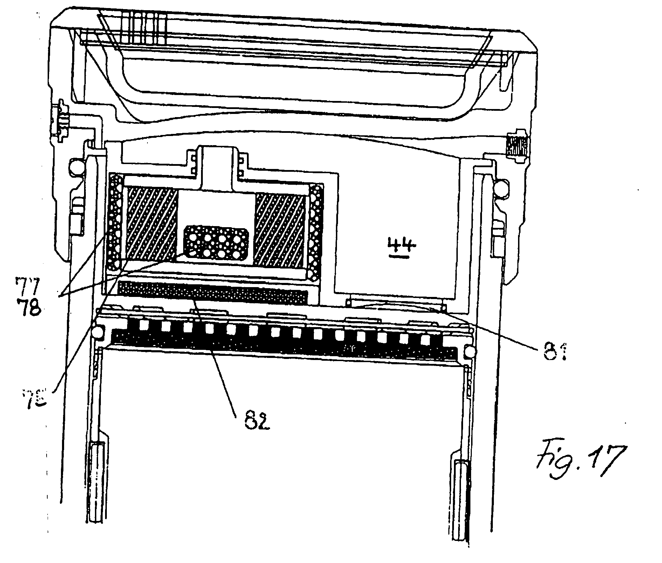

Fig. 17 zeigt die in Fig. 16 dargestellte Anordnung in ein erfindungsgemäßes Wasseraufbereitungsgerät eingebaut. Die Keimmembrane 75 nimmt bei 77, 78 das Redox-Granulat auf. Der Keimmembrane 75 ist ein Vorfilter 82 vorgeschaltet und ein Salztank 44 mit Einfüllöffnung für das Salz zugeordnet.

## Patentansprüche

1. Wasseraufbereitungsgerät zum Aufbereiten von Trinkwasser aus Leitungswasser durch Entfernen von Schadstoffen, bestehend aus einem Gehäuse (2) mit Deckel (4), Mantel und Boden (3), einem Wassereinlauf (10) und Wasserauslauf (11) und Filtermedien, die in übereinander angeordneten Gehäuseabschnitten (5, 6, 6a) von dem aufzubereitenden Leitungswasser durchströmt werden,
**dadurch gekennzeichnet, dass**
a) das Gehäuse (2) zumindest auf der Innenseite zylindrische Form mit durchgehend gleichem Innendurchmesser hat,
b) die Gehäuseabschnitte (5, 6, 6a) als in Baukastenbauweise auswechselbare und gegeneinander austauschbare Filterkartuschen ausgebildet sind,
c) mindestens zwei Filterkartuschen (5, 6, 6a) mit unterschiedlichen Filtermedien und mit gleichem Außendurchmesser übereinander angeordnet im Gehäuse (2) vorgesehen sind,
d) die einzelnen Filterkartuschen (5, 6, 6a) gegen das Filtergehäuse (2) abgedichtet (bei 9) sind, und
e) das aufzubereitende Leitungswasser von unten nach oben durch die Filterkartuschen gedrückt wird.

2. Gerät nach Anspruch 1, **dadurch gekennzeichnet, dass** zwischen den Filterkartuschen (5, 6, 6a) und dem Filtergehäuse (2) Druckausgleich-Überströmöffnungen (37) vorgesehen sind.

3. Gerät nach Anspruch 1 oder 2, **dadurch gekennzeichnet, dass** im Bereich zwischen den Filterkartuschen (5, 6, 6a) und dem Filtergehäuse (2) in dem Fluß des überströmenden Wassers (8) ein Aufkeimen des Wassers verhindernde Mittel (7) vorgesehen sind.

4. Gerät nach Anspruch 3, **dadurch gekennzeichnet, dass** die Mittel (7) Salztabletten sind, die z.B. an der Kartuschenaußenseite einsetzbar sind.

5. Gerät nach einem der Ansprüche 1 - 4, **dadurch gekennzeichnet, dass** der Trinkwasserfilter eine Keimmembrane (12; 28) aufweist, die in einem am Gehäuseboden angesetzten Keimmembranegehäuse (13) angeordnet ist.

6. Gerät nach Anspruch 5, **dadurch gekennzeichnet, dass** die Keimmembrane (12; 28) auswechselbar ausgebildet ist.

7. Gerät nach einem der Ansprüche 1 - 6, **dadurch gekennzeichnet, dass** der Deckel (4) des Filtergehäuses (2) abnehmbar ist, dass die übereinander angeordneten Filterkartuschen (5, 6, 6a) aus dem Filtergehäuse entfernbar sind, und dass jede der Filterkartuschen einen Griff zum Entfernen aus dem Filtergehäuse aufweist.

8. Gerät nach Anspruch 1, **dadurch gekennzeichnet, dass** die Filterkartuschen (5, 6, 6a) im Filtergehäuse (2) mit ausreichend Spiel angeordnet sind, dass eine Hinterspülung der Kartuschen möglich ist, und dass zwischen den einzelnen übereinander angeordneten Filterkartuschen Dichtungsringe (9) vorgesehen sind.

9. Gerät nach einem der Ansprüche 1 - 8, **dadurch gekennzeichnet, dass** für ein Gerät mit Untertischeinbau (64) oder dgl. eine Umschaltvorrichtung zum Umschalten von Gegenstrom-Regeneration bzw. Gleichstrom-Regeneration auf Filterbetrieb vorgesehen ist, wobei beim Regenerationsvorgang das Filtergehäuse (2) auf den Kopf gestellt ist bzw. die Anschlüsse vertauscht sind.

10. Gerät nach einem der Ansprüche 1-10, **gekennzeichnet durch** eine Vorrichtung zum Einführen von Salzwasser in den Trinkwasserfilter (1) unter Druck, bestehend aus einem mit Sole (46) gefüllten Behälter (44, 45), einer auf die Solenoberfläche wirkenden Gewichtsbelastung (48), einer Be- und Entlüftungsvorrichtung (74), die von der Solenoberfläche nach oben aus dem Gehäuse herausgeführt ist, und einem Auslauf (49) am unteren Ende des Behälters.

11. Gerät nach einem der Ansprüche 1-10, **dadurch gekennzeichnet, dass** die einzelnen Filterkartuschen (29, 30, 31) zylinderförmige Behälter sind, die oben und unten jeweils ein durchlässiges Kunststoffgitter (33) aufweisen und offen sind.

12. Gerät nach Anspruch 11, **dadurch gekennzeichnet, dass** die Kartuschenbehälter (29, 30, 31) an den Seitenwänden Gummiringabdichtungen (35) aufweisen und mit der Gehäusewand des Gerätes einen Zwischenraum (36) ausbilden, in dem Atmosphärendruck herrscht, und dass zum Druckausgleich in den Zwischenwänden die Kartuschen Ausgleichsöffnungen (37) besitzen.

13. Gerät nach einem der Ansprüche 1 - 12, **dadurch gekennzeichnet, dass** in den Kartuschenaußenwänden (33) Taschen (38) zur Aufnahme von Salztabletten (39) vorgesehen sind, und dass die Taschen durch Kunststoffgitter (40) abgedeckt sind.

14. Gerät nach einem der Ansprüche 1 - 13, **dadurch gekennzeichnet, dass** der Einlauf (42) des Gerätes an eine Wasserleitung (51) mit zwei Leitungszweigen (53, 54) und einen Umschalter (52) angeschlossen ist, dass einer (53) der Leitungszweige einen Solebehälter (50) aufnimmt, dass der Auslauf (21) des Gerätes über einen weiteren Umschalter (56) entweder mit einem Wasserhahn (57) oder mit einem Ablauf (58) verbunden ist, und dass wahlweise das Gerät in der Normalstellung oder in der Kopfstandstellung an die Zulauf- und die Ablaufleitung angeschlossen ist.

15. Gerät nach einem der Ansprüche 1 - 14 **dadurch gekennzeichnet, dass** eine Keimmembrane (75) hinter dem Filter und eine Keimmembrane (77, 78) vor dem Filter angeordnet ist, und dass die Keimmembranen ein die Bakterien abtötendes Material, z.B. ein Gemisch aus Kupfer und Zink von Redox-Granulaten, enthalten.

16. Verfahren zum Aufbereiten von Trinkwasser aus Leitungswasser durch Entfernen von Schadstoffen und zum Betreiben eines Wasseraufbereitungsgerätes nach Anspruch 1, wobei das Leitungswasser im Filterbetrieb durch übereinander angeordnete, in Gehäuseabschnitten (5, 6, 6a) untergebrachte Filtermedien hindurchgeführt wird, **dadurch gekennzeichnet, dass** das Gerät (1) im Regenerationsbetrieb gegenüber dem Filterbetrieb auf den Kopf gestellt angeordnet wird, und über dem Gerät ein mit Sole gefüllter Behälter (44) bereitgestellt wird, der Behälter an den Auslauf (43) des Gerätes angeschlossen wird, so dass durch Schwerkraftwirkung bzw. wahlweise durch Pumpwirkung Sole durch das auf den Kopf gestellte Gerät von unten nach oben gedrückt wird und die Sole am Einlauf (42) des auf den Kopf gestellten Gerätes abgeführt wird (bei 21).

17. Verfahren nach Anspruch 16, **dadurch gekennzeichnet, dass** bei Untertischbetrieb des Gerätes (unterhalb der Spüle) das Gerät (2) im Regenerationsbetrieb gegenüber dem Filterbetrieb auf den Kopf gestellt, das Spülbecken (64) mit Sole gefüllt, an den Auslaufhahn ein bis zum Spülbeckenboden reichender Regenerierschlauch (66) angeschlossen, die Sole durch Schwerkraftwirkung (68) durch den Filter geführt und der Ablauf (69) vom Filter in den Kanalanschluss geleitet wird.

18. Verfahren nach Anspruch 16, **dadurch gekennzeichnet, dass** für eine Gegenstrom-Regeneration das Filtergerät (F) in eine Spüle gestellt, daneben, z.B. auf der Tischplatte, ein Solebehälter (45) aufgestellt, auf der Oberseite des Solevolumens ein eine Gewichtsbelastung (48) aufnehmendes Gehäuse (47) schwimmend aufgesetzt, die Sole am Auslass (49) über eine Schlauchleitung (71) in das Filtergehäuse (F) eingeführt und durch die einzelnen Filterkartuschen gedrückt und anschließend oben über eine Schlauchleitung (73) in den Abwasserkanal abgeleitet wird.

19. Verfahren nach Anspruch 18, **dadurch gekennzeichnet, dass** das Gehäuse innerhalb des Behälters (45) schwimmerartig (47) und im Behälter höhenbeweglich angeordnet sowie über Gummidichtungen (73) gegen die Behälterwand abgedichtet wird.

## Claims

1. Water treating apparatus for treating drinking water from mains water by removing noxious substances, consisting of a housing (2) with lid (4), jacket and base (3), a water inlet (10) and water outlet (11) and filter media in superposed housing sections (5, 6, 6a) through which the mains water to be treated flows **characterised in that**
a) the housing (2) has at least on the inside a cylindrical shape with the continuously same internal diameter,
b) the housing sections (5, 6, 6a) are designed in kit form as replaceable mutually interchangeable filter cartridges,
c) at least two filter cartridges (5, 6, 6a) are provided with different filter media and with the same external diameter disposed one above the other in the housing (2),
d) the individual filter cartridges (5, 6, 6a) are sealed from the filter housing (2), and
e) the mains water to be treated is forced from the bottom upwards through the filter cartridges.

2. Apparatus according to claim 1 **characterised in that** pressure compensating overflow openings (37) are provided between the filter cartridges (5, 6, 6a) and the filter housing (2).

3. Apparatus according to claim 1 or 2 **characterised in that** means (7) preventing germ growth in the water are provided in the area between the filter cartridges (5, 6, 6a) and the filter housing (2) in the flow of the overflowing water (8).

4. Apparatus according to claim 3 **characterised in that** the means (7) are salt tablets which can be placed for example on the outside of the cartridge.

5. Apparatus according to one of claims 1 to 4 **characterised in that** the drinking water filter has a germ membrane (12; 28) which is arranged in a germ membrane housing (13) fitted on the housing base.

6. Apparatus according to claim 5 **characterised in that** the germ membrane (12; 28) is designed to be replaceable.

7. Apparatus according to one of claims 1 to 6 **characterised in that** the lid (4) of the filter housing (2) is detachable, that the filter cartridges (5, 6, 6a) arranged one above the other are removable from the filter housing and that each of the filter cartridges has a handle for removal from the filter housing.

8. Apparatus according to claim 1 **characterised in that** the filter cartridges (5, 6, 6a) are arranged with sufficient play in the filter housing (2) so that the cartridges can be flushed out at the back and that sealing rings (9) are provided between the individual superposed filter cartridges.

9. Apparatus according to one of claims 1 to 8 **characterised in that** for an apparatus having an under-table installation (64) or the like a switching device is provided for switching over from counter-flow regeneration or co-flow regeneration to filter operation wherein during the regeneration process the filter housing (2) is placed upside down or the connections are changed over.

10. Apparatus according to one of claims 1 to 10 **characterised by** a device for introducing salt water into the drinking water filter (1) under pressure, comprising a container (44, 45) filled with brine (46), a weight load (48) acting on the brine surface, an aerating and ventilating device (74) which is guided upwards from the brine surface and out from the housing, and an outlet (49) at the lower end of the container.

11. Apparatus according to one of claims 1 to 10 **characterised in that** the individual filter cartridges (29, 30, 31) are cylindrical shaped containers which each have a permeable plastics mesh grid (33) at the top and bottom and are open.

12. Apparatus according to claim 11 **characterised in that** the cartridge containers (29, 30, 31) have rubber ring seals (35) on the side walls and form with the housing wall of the apparatus an interspace (36) in which atmospheric pressure prevails, and that for pressure compensation in the intermediate walls the cartridges have compensation openings (37).

13. Apparatus according to one of claims 1 - 12 **characterised in that** the cartridge outside walls (33) are provided with pockets (38) for receiving salt tablets (39) and that the pockets are covered by plastics mesh grids(40).

14. Apparatus according to one of claims 1 to 13 **characterised in that** the inlet (42) of the apparatus is attached to a water pipe (51) with two branch pipes (53, 54) and a selector switch (52), that one (53) of the branch pipes holds a brine container (50), that the outlet (21) of the apparatus is connected by a further selector switch (56) either to a tap (57) or to a drain (58) and that the apparatus is connected to the inlet and outlet pipe selectively in the normal position or in the upside down position.

15. Apparatus according to one of claims 1 to 14 **characterised in that** a germ membrane (75) is mounted behind the filter and a germ membrane (77, 78) is mounted in front of the filter, and that the germ membranes contain a bactericide material, e.g. a mixture of copper and zinc of redox granules.

16. |Method for treating drinking water from mains water by removing noxious substances and for operating a water treating apparatus according to claim 1 wherein the mains water is passed during filtration through superposed filter media stored in housing sections (5, 6, 6a) **characterised in that** during the regeneration operation compared with the filter operation the apparatus (1) is placed upside down, and a brine-filled container (44) is set up above the apparatus, the container is connected to the outlet (43) of the apparatus so that through gravity or selectively through pump action brine is forced from the bottom upwards through the inverted apparatus and the brine is discharged (at 21) at the inlet (42) of the inverted apparatus.

17. Method according to claim 16 **characterised in that** with an under-table operation of the apparatus (underneath the sink) the apparatus (2) is inverted during the regeneration operation compared with the filter operation, the sink basin (64) is filled with brine, a regeneration hose (66) extending to the bottom of the sink is attached to the outlet tap, the brine is guided by gravity (68) through the filter and the outflow (69) from the filter is directed into the sewer connection.

18. Method according to claim 16 **characterised in that** for a counter flow regeneration the filter apparatus (F) is placed in a sink, a brine container (45) is placed alongside, e.g. on the tabletop, a housing (47) holding a weight load (48) is placed floating on the top of the brine volume, the brine is introduced at the outlet (49) via a hose pipe (71) into the filter housing (F) and forced through the individual filter cartridges and is then directed at the top via a hose pipe (73) into the waste pipe.

19. Method according to claim 18 **characterised in that** the housing is mounted inside the container (45) float-like (47) and vertically movable in the container and is sealed against the container wall by rubber seals (73).

## Revendications

1. Dispositif de traitement de l'eau en vue de la préparation d'eau potable à partir d'eau du robinet par élimination des substances nocives, se composant d'un carter (2) avec un couvercle (4), une chemise et un fond (3), d'une admission d'eau (10) et d'une évacuation d'eau (11) et de milieux filtrants, qui sont traversés dans des sections de carter disposées les unes sur les autres (5, 6, 6a) par l'eau de conduite à apprêter,
**caractérisé en ce que**
a) le carter (2) possède, au moins sur la face intérieure, une forme cylindrique avec un diamètre intérieur constant sur toute sa longueur,
b) les sections de carter (5, 6, 6a) sont constituées sous la forme des cartouches-filtres amovibles et échangeables les unes avec les autres selon une conception à base d'éléments démontables,
c) l'on prévoit dans le carter (2) au moins deux cartouches-filtres (5, 6, 6a) à milieux filtrants différents et disposés l'un sur l'autre à diamètre identique,
d) les cartouches-filtres (5, 6, 6a) sont étanchéifiées (en position 9) vis-à-vis du carter de filtres (2), et
e) l'eau du robinet à apprêter est forcée sous pression du bas vers le haut à travers les cartouches-filtres.

2. Dispositif selon la revendication 1, **caractérisé en ce que** l'on prévoit, entre les cartouches-filtres (5, 6, 6a) et le carter de filtre (2), des orifices de trop-plein/d'égalisation de la pression (37).

3. Dispositif selon la revendication 1 ou 2, **caractérisé en ce que** l'on prévoit dans la zone entre les cartouches-filtres (5, 6, 6a) et le carter de filtre (2), dans le flux de l'eau de trop-plein (8), un moyen (7) empêchant la prolifération de germes de l'eau.

4. Dispositif selon la revendication 3, **caractérisé en ce que** les moyens (7) sont des comprimés de sel, qui sont utilisables par exemple sur la face extérieure des cartouches.

5. Dispositif selon l'une quelconque des revendications 1 à 4, **caractérisé en ce que** la filtre d'eau potable présente une membrane à germes (12; 28) qui est disposée dans un boîtier à membrane pour germes (13) fixé au fond du carter.

6. Dispositif selon la revendication 5, **caractérisé en ce que** la membrane à germes (12; 28) est réalisée de manière à être échangeable.

7. Dispositif selon l'une quelconque des revendications 1 à 6, **caractérisé en ce que** le couvercle (4) du carter de filtre (2) peut être retiré, **en ce que** les cartouches-filtres (5, 6, 6a) disposées les unes sur les autres peuvent être enlevées hors du carter de filtre et **en ce que** chacune des cartouches-filtres (5, 6, 6a) présente une poignée en vue de son retrait hors du carter de filtre.

8. Dispositif selon la revendication 1, **caractérisé en ce que** les cartouches-filtres (5, 6, 6a) sont disposées dans le carter de filtre (2) avec suffisamment de jeu pour qu'un rinçage sur l'arrière des cartouches soit possible et **en ce que** l'on prévoit des anneaux étanches (9) entre les cartouches-filtres (5, 6, 6a) individuelles disposées les unes sur les autres.

9. Dispositif selon l'une quelconque des revendications 1 à 8, **caractérisé en ce que** l'on prévoit, pour un dispositif avec encastrement sous table (64) ou similaire, un équipement de commutation en vue de la commutation de la régénération en contre-courant ou de la régénération en co-courant vers le fonctionnement de filtrage, le carter de filtre (2) étant mis par basculement sur la tête lors de la procédure de régénération ou les raccordements étant intervertis.

10. Dispositif selon l'une quelconque des revendications 1 à 10, **caractérisé par** un équipement en vue de l'introduction sous pression d'eau salée dans le filtre d'eau potable (1), se composant d'un récipient (44, 45) rempli d'une saumure (46), d'une charge pondérale (48) agissant sur la surface de la saumure, d'un dispositif de ventilation et de purge (74), qui sort du carter vers le haut à partir de la surface de la saumure, et d'une évacuation (49) à l'extrémité inférieure du récipient.

11. Dispositif selon l'une quelconque des revendications 1 à 10, **caractérisé en ce que** les cartouches-filtres individuelles (29, 30, 31) sont des récipients de forme cylindrique, qui présentent à chaque fois, en ahut et en bas, une grille en plastique perméable (33) et qui sont ouverts.

12. Dispositif selon la revendication 11, **caractérisé en ce que** les récipients de cartouche (29, 30, 31) présentent sur les parois latérales des joints étanches en caoutchouc (35) et forment avec la paroi du carter du dispositif un espace intermédiaire (36), dans lequel règne la pression atmosphérique et **en ce que** les cartouches possèdent des ouvertures d'égalisation en vue de l'égalisation de la pression dans les parois intermédiaires.

13. Dispositif selon l'une quelconque des revendications 1 à 12, **caractérisé en ce que** l'on prévoit, dans les parois extérieures des cartouches (33), des poches (38) en vue de la réception de comprimés de sel (39) et **en ce que** les poches sont recouvertes d'une grille en matière plastique (40).

14. Dispositif selon l'une quelconque des revendications 1 à 13, **caractérisé en ce que** l'admission (42) du dispositif est raccordée à une conduite d'eau (51) avec deux branches de ligne (53, 54) et un commutateur (52), **en ce que** l'une (53) des branches de ligne prend en charge un récipient de saumure (50), **en ce que** l'évacuation (21) du dispositif est reliée à l'aide d'un commutateur supplémentaire (56), soit avec un robinet d'eau (57), soit avec une évacuation (58), et **en ce que**, au choix, le dispositif est raccordé, dans la position normale ou dans la position capotée avec basculement sur la tête, à la conduite d'admission et à la conduite d'évacuation.

15. Dispositif selon l'une quelconque des revendications 1 à 14, **caractérisé en ce qu'**une membrane à germes (75) est disposée derrière le filtre et qu'un membrane à germes (77, 78) est disposé avant le filtre, et **en ce que** les membranes à germes contiennent un matériau bactéricide, par exemple un mélange de cuivre ou et de zinc sous forme de granulés redox.

16. Procédé en vue de la préparation d'eau potable à partir d'eau du robinet par élimination des substances nocives et en vue de l'opération d'un dispositif de traitement de l'eau selon la revendication 1, l'eau de conduite traversant au cours du fonctionnement de filtrage, les milieux filtrants disposés les uns sur les autres, logés dans des sections du carter (5, 6, 6a), **caractérisé en ce que** le dispositif (1) est arrangé, au cours du fonctionnement de régénération par rapport au fonctionnement de filtrage, avec un basculement sur la tête et **en ce qu'**un récipient rempli de saumure (44) est mis à disposition, **en ce que** le récipient est raccordé à l'évacuation (43) du dispositif, de telle sorte que, du fait de la force de pesanteur ou, au choix, du fait d'une action de pompage, de la saumure est forcée de bas en haut sous pression à travers le dispositif placé sur la tête et que la saumure est évacuée à l'admission (42) (en position 21) du dispositif placé sur la tête.

17. Procédé selon la revendication 16, **caractérisé en ce que**, dans le cas du fonctionnement en sous table du dispositif (sous l'évier), le dispositif (2) est placé sur la tête en fonctionnement de régénération par rapport au fonctionnement de filtrage, **en ce que** le bassin d'évier (64) est rempli de saumure, **en ce qu'**un tuyau souple de régénération allant jusqu'au fond du bassin d'évier (66) est raccordé au robinet d'évacuation, **en ce que** la saumure est acheminée à travers le filtre sous l'effet de la force de pesanteur (68) et **en ce que** l'évacuation (69) est conduite du filtre au raccordement du canal.

18. Procédé selon la revendication 16, **caractérisé en ce qu'**en vue d'une régénération en contre-courant, le dispositif de filtrage (F) est placé dans un évier, **en ce qu'**un récipient de saumure (45) est mis en place en outre, par exemple sur le haut d'une table, **en ce qu'**un boîtier (47) contenant une charge pondérale (48) est placé de manière à flotter sur la face supérieure du volume de saumure, **en ce que** la saumure est introduite dans le dispositif de filtrage (F) à l'évacuation (49) à l'aide d'un tuyau souple (71) et est forcée sous pression à travers les cartouches-filtres individuelles et est finalement évacuée en haut à l'aide d'un tuyau souple (73 dans le canal d'eaux résiduaires.

19. Procédé selon la revendication 18, **caractérisé en ce que** le boîtier au sein du récipient (45) est disposé de manière à pouvoir flotter (47) et à se déplacer en hauteur dans le récipient et **en ce qu'**il est étanchéifié par rapport à la paroi du récipient à l'aide de joints étanches en caoutchouc (73).
